# EUROPEAN PATENT APPLICATION

(11) **EP 2 131 214 A1**
(43) Date of publication of application: **09.12.2009**
(21) Application number: 08722137.0
(22) Date of filing: 14.03.2008
(51) Int. Cl.: G02B 1/04, G02B 3/00, H01L 27/14, H04N 5/225, H04N 5/335

(54) **IMAGE PICK-UP DEVICE AND METHOD FOR MANUFACTURING THE DEVICE**

(30) Priority: 29.03.2007 JP 2007087982
(71) Applicant: Konica Minolta Opto, Inc., Hachioji-shi, Tokyo 192-8505 (JP)
(72) Inventor: WACHI, Mika, Hachioji-shi Tokyo 192-8505 (JP); HARA, Akiko, Hachioji-shi Tokyo 192-8505 (JP); WASHIZU, Takashi, Hachioji-shi Tokyo 192-8505 (JP)
(74) Representative: Henkel, Feiler & Hänzel
(86) International application number: PCT/JP2008/054741
(87) International publication number: WO 2008/120558

(57) **Abstract**

This invention provides an image pick-up device with a lens body which can cope with a reflow process and can suppresses deterioration in optical properties even upon exposure to the reflow process. The image pick-up device comprises a substrate (1) with an image sensor (11) with an image receiving part mounted thereon, lens (16) for imaging light reflected from a subject on the image receiving part, and a lens holder (15) for holding the lens (16). The lens (16) is formed of an organic-inorganic composite material comprising inorganic microparticles having a particle diameter of not more than 50 nm and a thermosetting resin having a siloxane bond having Si-O-Si as a back born. A module (6) comprises the lens (6) and the lens holder (15) uses an image pick-up device fixed on the image sensor (11) in the substrate (1) by the reflow process.

## Description

### TECHNICAL FIELD

The present invention directs to an image pick-up device, particularly to an image pick-up device of which a lens body can cope with a reflow process and production method thereof.

### BACKGROUND OF THE INVENTION

Inorganic glass material has been generally used for an optical lens in view of excellent an optical property and mechanical strength. However, devices employing the optical lens become more compact and lens is also required to be small size, consequently it has become difficult to produce one having large curvature (R) or complicated form by the inorganic glass material.

Plastic materials easy for processing have been investigated and practiced. Plastic materials for easy processing include thermoplastic resin having good transparency such as polymethylmethacrylate, polycarbonate and polystyrene. Though the thermoplastic resins can be processed easily because they are softened or melt at relative low temperature, the mold lens has such drawbacks as deformation by heat. When parts having mounted with the lens are subjected to soldier reflow process, lens is also exposed to solder bath around 260 °C, whereby the lens composed of a thermoplastic resin having poor stability against heat would cause shape deterioration and problems occurs.

Thermosetting resins such as silicon resins have been studied as other plastic materials for the use of an optical lens (see, Patent Document 1). The thermosetting resins has liquid state before heating or shows fluidity due to heating, and have good processability similar to thermal plastic resins. It does not show fluidity after setting different from the thermal plastic resins and, therefore, deformation due to heat is small.
Patent Document 1: JP-A 2004-146554 (Cols. 0014-0027 etc.)

### DISCLOSURE OF THE INVNENTION

### PROBLEM TO BE DISSOLVED BY THE PRESENT INVENTION

However, when an optical lens is composed of silicon resin solely, coefficient of linear expansion or drift of focal length is so large that it is difficult to apply to a device of an image pick-up system. Silicon resins having relatively high reflective index has small Abbe number and is liable to disperse light, and therefore it has such disadvantage as large magnification color aberration and poor image formation.

A primary object of this invention is to provide an image pick-up device, which has a lens body adapted to reflow processing and inhibits deterioration of an optical property subjected to reflow processing, and its manufacturing method.

### TECHNICAL MEANS TO DISSOLVE THE PROBLEM

An image pick-up device is provided according to one of embodiments of this invention, comprising;
a substrate with an image sensor having an image receiving part mounted thereon,
a lens body for an image formation by light reflected from a subject on the image receiving part, and
a holder for holding the lens body,
wherein the lens body is composed of an organic-inorganic composite material comprising an inorganic microparticles having a particle diameter of not more than 50 nm and a thermosetting resin having siloxane bond having Si-O-Si as a back born, and
the module comprising the lens body and the holder is fixed to the substrate over the image sensor by reflow process.

It is preferable that a glass transition temperature of the organic-inorganic composite material Tg satisfies Tg < - 40 °C or 260 °C < Tg.

It is preferable that the lens body has transmittance of light having wavelength of 400 nm of not less than 80 %.

It is preferable that the lens body has lower coefficient of linear expansion than that of the thermosetting resin.

It is preferable that the inorganic microparticles are single particles composed of one kind of substance, composite particles composed of plural kinds of substance, or core-shell particles composed of a core covered with shell.

A manufacturing method of an image pick-up device provided according to another embodiment of this invention is a method of the image pick-up device, which comprises;
a substrate on which an image sensor having an image receiving part is mounted,
a lens body for forming an image by light reflected from a subject on the image receiving part, the lens body being composed of an organic-inorganic composite material comprising an inorganic microparticles having a particle diameter of not more than 50 nm and a thermosetting resin having siloxane bond having Si-O-Si as a back born, and
a holder for holding the lens body,
wherein the method comprises steps of;
putting the module comprising the lens body and the holder over the image sensor on the substrate, and
subjecting the substrate on which the module has been put to reflow process so as to fix the module to the substrate over the image sensor.

### ADVANTAGE OF THE INVENTION

The lens body according to this invention can cope with reflow process and can suppress a deterioration of optical properties even when subjected to a reflow process, since the lens body is composed of a thermal setting resin having a siloxane bond having Si-O-si as a back born (silicon resin) as well as an organic-inorganic composite material containing inorganic microparticles. (Refer to Examples described later)

### BRIEF DESCRIPTION OF DRAWINGS

Fig. 1 is an angled view of an image pick-up device used in a preferable embodiment of this invention.
Fig. 2 is a schematic sectional view of partly expanded image pick-up device used in a preferable embodiment of this invention.
Fig. 3 is drawing to show outline of manufacturing method of an image pick-up device in a preferable embodiment of this invention.
Fig. 4 is a graph showing light transmittance of comparative samples with that of this invention.

### DESCRIPTION OF SYMBOLS

- 100:: Image pick-up device
- 1:: Circuit substrate
- 2:: Camera module
- 3:: Cover case
- 4:: Imaging opening
- 5:: Substrate module
- 6:: Lens module
- 10:: Subsidiary substrate
- 10a:: Mounting hole
- 11:: CCD image sensor
- 12:: Resin
- 15:: Lens holder
- 15a:: Holder portion
- 15b:: Mount portion
- 16:: Lens
- 17:: Collar parts
- 18:: Solder

### MOST PREFERABLE EMBODIMENT TO PRACTICE THE INVENTION

The preferable embodiments of the present invention are described by referring to drawings.

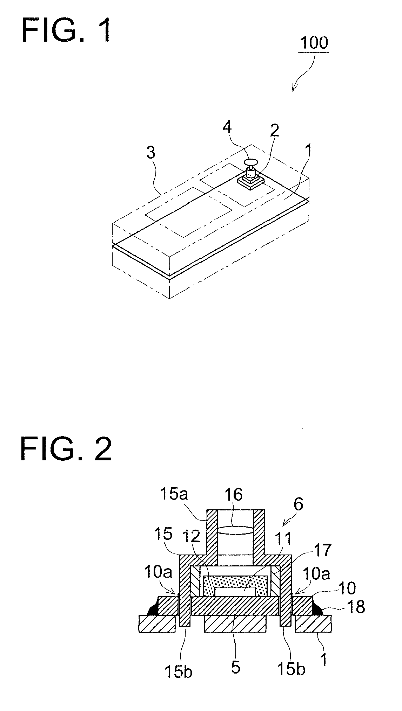

The image pick-up device 100 has a circuit board 1 on which electronics parts composing electronic circuit for mobile information terminal such as mobile phone, and a camera module 2 is mounted on the circuit board 1, as illustrated by Fig. 1. The camera module 2 is small one composed of a CCD image sensor and a lens in combination used for board mounting, and can take in image of imaging objective through imaging opening 4 provided in cover case 3 in finished product in which the circuit board mounting electronic parts are incorporated in the cover case 3. Electronic parts other than camera module 2 are not shown in Fig. 1.

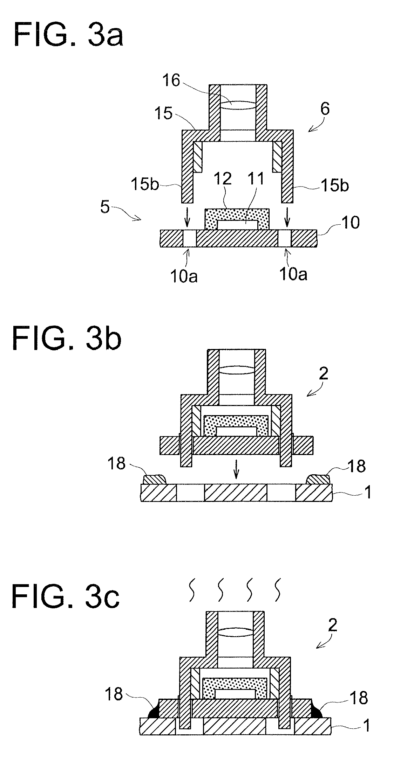

The camera module 2 is composed of the substrate module 5 (Fig. 3a is referred) and the lens module 6 (Fig. 3c is referred) as shown in Fig. 2, and the camera module 2 as a whole is mounted on the circuit substrate 1 by mounting the substrate module 5 on the circuit substrate 1. The substrate module 5 is a photo receiving module comprising subsidiary substrate on which photo receiving element for image formation CCD image sensor 11 is mounted, and an upper surface of CCD image sensor 11 is sealed with resin 12.

Photo receiving part (not illustrated in the drawing) is formed by many photoelectron conversion pixels arranged in lattice form on upper surface of CCD image sensor 11. Charge generated on each pixel by focusing optical image on the photo receiving part is took out as image signal. Subsidiary substrate 10 is mounted on circuit substrate with lead-free solder 18, whereby subsidiary substrate 10 is fixed on the circuit substrate 1, as well as connecting electrodes (not shown ) on subsidiary substrate 10 are electrically connected to circuit electrodes (not shown) on the upper surface of circuit substrate.

Lens module 6 has lens holder 15 to hold lens 16. Lens 16 is hold by lens holder 16 at upper portion and the upper portion is holder portion 15a to hold lens 16. Bottom portion of lens holder 15 is mounting portion 15b which fixes lens module 6 to subsidiary substrate 10 by inserted into mounting hole 10a provided in subsidiary substrate 10. Lens module is fixed by employing a method of inserting mounting portion 15 into mounting hole 10a with pressure, adhering by adhesives and so on.

Lens 16 has a function to image light reflected from a subject on the image receiving part of CCD image sensor 11, and has a high light transmittance of 80 % or more at wave length of 400 nm. Lens 16 is composed of an organic-inorganic composite material in which inorganic microparticles are dispersed in a thermosetting resin, and the organic-inorganic composite material has properties of having glass transition points Tg of Tg < -40 °C or 260 °C < Tg. Lens 16 has lower coefficient of linear expansion than that of the thermosetting resin in the organic-inorganic composite material. Lens holder 15 is composed of the same material as lens 16 and has similar property.

The glass transition temperature Tg can be measured by employing EXSTAR 6000 TMA produced by SII Nanotechnology Inc.

Thermosetting resins in an organic-inorganic composite material to compose lens 16 are silicone resins containing siloxane bonds as Si-O-Si backbones. Silicone resins composed of a predetermined amount of polyorganosiloxane resins can be used as these silicone resins, (for example, refer to JP-A H06-997) .

Thermosetting polyorganosiloxane resins are not specifically limited provided that the resins are formed into a three dimensional network structure via a siloxane bonding skeleton by continuous hydrolysis-dehydration condensation reaction by heating, and generally exhibit thermosetting properties when heated for a long period of time at high temperature and have properties wherein softening by heating hardly occurs again once thermally set.

Such polyorganosiloxane resins contain a constituent unit represented by following Formula (A), and the form thereof is any of a chain, a ring, and a network form.

((R₁)(R₂)SiO)ₙ (A)

In Formula (A), "R₁" and "R₂" represent a substituted or unsubstituted monovalent hydrocarbon group of the same type or such groups of different type. Specifically, as "R₁" and "R₂", there are exemplified an alkyl group such as a methyl group, an ethyl group, a propyl group, or a butyl group, an alkenyl group such as a vinyl group or an allyl group, an aryl group such as a phenyl group or a tolyl group, and a cycloalkyl group such as a cyclohexyl group or a cyclooctyl group; or groups wherein hydrogen atoms bonded to carbon atoms of these groups are substituted with a halogen atom, a cyano group, or an amino group, including, for example, a chloromethyl group, a 3,3,3-trifluoropropyl group, a cyanomethyl group, a γ-aminopropyl group, and an N-(β-aminoethyl)-γ-aminopropyl group. The groups represented by "R₁" and "R₂" are also a group selected from a hydroxyl group and an alkoxy group. Further, in above Formula (A), "n" represents an integer of at least 50.

Polyorganosiloxane resins are commonly used via dissolution in a hydrocarbon based solvent such as toluene, xylene, or petroleum based solvent; or in a mixture of any of these and a polar solvent. Further, solvents of different compositions may be used provided that these are mutually soluble.

Production methods of a polyorganosiloxane resin are not specifically limited, and any of the methods known in the art are employable. For example, one type of organohalogenosilane or a mixture of two types thereof is subjected to hydrolysis or alcoholysis to obtain the resin. A polyorganosiloxane resin generally contains a silanol group or a hydrolyzable group such as an alkoxy group. These groups are contained at a ratio of 1 - 10% by weight converted as a silanol group equivalent.

These reactions are commonly conducted in the presence of a solvent capable of melting an organohalogenosilane. Further, there is usable a method of synthesizing a block copolymer wherein a straight-chain polyorganosiloxane having a hydroxyl group, an alkoxy group, or a halogen atom at molecular chain terminals is hydrolyzed together with organotrichlorosilane. The thus-prepared polyorganosiloxane resin usually contains residual HCl, and those containing at a ratio of at most 10 ppm, preferably at most 1 ppm, may be used in view of good storage stability in a composition of the embodiment of the present invention.

Inorganic microparticles used in the organic-inorganic composite materials to compose the lens 16 include oxide microparticles, metal salt microparticles and semiconductor microparticles, and those are used among them by selecting properly those wherein absorption, light emission and fluorescence are not generated in the wavelength area used as optical element microparticles.

The metal oxide is used for the oxide microparticles wherein one or more kinds of metal selected by a group including Li, Na, Mg, Al, Si, K, Ca, Sc, Ti, V, Cr, Mn, Fe, Co, Ni, Cu, Zn, Rb, Sr, Y, Nb, Zr, Mo, Ag, Cd, In, Sn, Sb, Cs, Ba, La, Ta, Hf, W, Ir, Tl, Pb, Bi and rare earth metal. More specifically, for example, oxide such as silicon oxide, titanium oxide, zinc oxide, aluminum oxide, zirconium oxide, hafnium oxide, niobium oxide, tantalum oxide, magnesium oxide, calcium oxide, strontium oxide, barium oxide, indium oxide, tin oxide, lead oxide; complex oxide compounds of these oxides such as lithium niobate, potassium niobate, lithium tantalate and aluminum magnesium oxide (MgAl₂O₄) are cited.

Furthermore, rare earth oxides are used for the oxide microparticles. More specifically, for example, scandium oxide, yttrium oxide, lanthanum oxide, cerium oxide, praseodymium oxide, neodymium oxide, samarium oxide, europium oxide, gadolinium oxide, terbium oxide, dysprosium oxide, holmium oxide, erbium oxide, thulium oxide, ytterbium oxide, lutetium oxide are cited. As metal salt microparticles, the carbonate, phosphate, sulfate, etc. are cited. More specifically, for example, calcium carbonate and aluminum phosphate are cited.

Semiconductor microparticles mean the microparticles constructed by a semiconductor crystal. Examples the semiconductor crystal composition include chemical elements of the 14th group elements in the periodic table such as carbon, silica, germanium and tin; chemical elements of the 15th group elements in the periodic table such as phosphor (black phosphor); chemical elements of the 16th group elements in the periodic table such as selenium and tellurium; compounds composed of a plural number of the 14th group elements in the periodic table such as silicon carbide (SiC); compounds composed of an element of the 14th group in the periodic table and an element of the 16th group in the periodic table such as tin (IV) oxide (SnO₂), tin (II, IV) sulfide (Sn(II)Sn(IV)S₃), tin (IV) sulfide (SnS₂), tin (II) sulfide (SnS), tin (II) selenide (SnSe), tin (II) telluride (SnTe), lead (II) sulfide (PbS), lead (II) selenide (PbSe) and lead (II) telluride (PbTe); compounds composed of an element of the 13th group in the periodic table and an element of the 15th group in the periodic table (or III-V group compound semiconductors) such as boron nitride (BN), boron phosphide (BP), boron arsenide (BAs), aluminum nitride (AlN), aluminum phosphide (AlP), aluminum arsenide (AlAs), aluminum antimonide (AlSb), gallium nitride (GaN), gallium phosphide (GaP), gallium arsenide (GaAs), gallium antimonide (GaSb), indium nitride (InN), indium phosphide (InP), indium arsenide (InAs) and indium antimonide (InSb); compounds composed of an element of the 13th group in the periodic table and an element of the 16th group in the periodic table such as aluminum sulfide (Al₂S₃), aluminum selenide (Al₂Se₃), gallium sulfide (Ga₂S₃), gallium selenide (Ga₂Se₃), gallium telluride (Ga₂Te₃), indium oxide (In₂O₃), indium sulfide (In₂S₃), indium selenide (InSe) and indium telluride (In₂Te₃); compounds composed of an element of the 13th group in the periodic table and an element of the 17th group in the periodic table such as thallium (I) chloride (TlCl), thallium (I) bromide (TlBr), thallium (I) iodide (TlT); compounds composed of an element of the 12th group in the periodic table and an element of the 16th group in the periodic table (or II-VI group compound semiconductors) such as zinc oxide (ZnO), zinc sulfide (ZnS), zinc selenide (ZnSe), zinc telluride (ZnTe), cadmium oxide (Cdo), cadmium sulfide (CdS), cadmium selenide (CdSe), cadmium telluride (CdTe), mercury sulfide (HgS), mercury selenide (HgSe) and mercury telluride (HgTe); compounds composed of an element of the 15th group in the periodic table and an element of the 16th group in the periodic table such as arsenic (III) sulfide (As₂S₃), arsenic selenide (As₂Se₃), arsenic telluride (III) (As₂Te₃), antimony (III) sulfide (Sb₂S₃), antimony (III) selenide (Sb₂Se₃), antimony (III) telluride (Sb₂Te₃) , bismuth (III) sulfide (Bi₂S₃), bismuth (III) selenide (Bi₂Se₃) and bismuth (III) telluride (Bi₂Te₃); compounds composed of an element of the 11th group in the periodic table and an element of the 16th group in the periodic table such as copper (I) oxide (Cu₂O) and copper (I) selenide (Cu₂Se); compounds composed of an element of the 11th group in the periodic table and an element of the 17th group in the periodic table such as copper (I) chloride (CuCl), copper (I) bromide (CuBr), copper (I) iodide (CuI), silver chloride (AgCl) and silver bromide (AgBr); compounds composed of an element of the 10th group in the periodic table and an element of the 16th group in the periodic table such as nickel (II) oxide (NiO); compounds composed of an element of the 9th group in the periodic table and an element of the 16th group in the periodic table such as cobalt (II) oxide (CoO) and cobalt (II) sulfide (CoS); compounds composed of an element of the 8th group in the periodic table and an element of the 16th group in the periodic table such as triiron tetraoxide (Fe₃O₄) and iron (II) sulfide (FeS); compounds composed of an element of the 7th group in the periodic table and an element of the 16th group in the periodic table such as manganese (II) oxide (MnO); compounds composed of an element of the 6th group in the periodic table and an element of the 16th group in the periodic table such as molybdenum (IV) sulfide (MoS₂) and tungsten (IV) oxide (WO₂); compounds composed of an element of the 5th group in the periodic table and an element of the 16th group in the periodic table such as vanadium (II) oxide (VO), vanadium (IV) oxide (VO₂) and tantalum (V) oxide (Ta₂O₅); compounds composed of an element of the 4th group in the periodic table and an element of the 16th group in the periodic table such as titanium oxide (such as TiO₂ Ti₂O₅, Ti₂O₃ and Ti₅O₉); compounds composed of an element of the 2nd group in the periodic table and an element of the 16th group in the periodic table such as magnesium sulfide (MgS) and magnesium selenide (MgSe); chalcogen spinels such as cadmium (II) chromium (III) oxide (CdCr₂O₄), cadmium (II) chromium (III) selenide (CdCr₂Se₄), copper (II) chromium (III) sulfide (CuCr₂S4) and mercury selenide (II) chromium (III) (HgCr₂Se₄); and barium titanate (BaTiO₃). Further, semiconductor clusters structures of which are established such as BN₇₅(BF₂)₁₅F₁₅, described in Adv. Mater., vol. 4, p.494 (1991) by G. Schmid, et al.; and Cu₁₄₆Se₇₃(triethylphosphine)₂₂ described in Angew. Chem. Int. Ed. Engl., vol. 29, p.1452 (1990) by D. Fenske et al. are also listed as examples.

Refractive indexes of silicon resins are about 1.4 - 1.56 in many cases, and an inorganic microparticles having close refractive index to it are preferably used in an embodiment of this invention. Practical examples include silica (silicon oxide), calcium carbonate, aluminum phosphate, aluminum oxide, magnesium oxide and aluminum magnesium oxides. The composite oxide microparticles comprising Si and a metal element other than Si are more preferably employed in view of adjusting refractive index arbitrary.

Composition distribution of the composite oxide microparticles preferably used in an embodiment of this invention is not particularly restricted, and silica and other oxides may be dispersed approximately uniformly or may form core shell. Silica and other oxides, which compose the composite oxide microparticles preferably used in an embodiment of this invention, may be crystal or amorphous. Content ratio of the silica and other oxides can be determined arbitrary depending on the species of oxides or refractive index of the prepared inorganic microparticles.

When the composite oxide microparticles preferably used in an embodiment of this invention are in a form of core shell structure (i.e., a structure of inner core particle covered with shell layer), aluminum oxide, zirconium oxide, titanium oxide zinc oxide and so on are preferably employed for a core particle since they form relatively fine particles. Refractive index of metal oxide microparticles as a whole can be adjusted as desired and the nature of surface of the particles easily modified by an organic compound, and therefore inhibition of moisture absorption by the particles and stable dispersion in the resin are attained by employing silicon oxide for a shell layer covering the inner core. Thickness of the shell layer is 1 to 5 nm, and preferably 1.5 to 4 nm. Inner core can not be covered perfectly and surface modification is not complete when the thickness is not more than 1 nm. High concentration of raw material is required and therefore coagulation between the particles occurs or distribution of refractive index becomes large due to shell thickness variation between the particle is large when thickness is not less than 5 nm.

The inorganic microparticles used in this invention may be a single kind of inorganic microparticles composed of a single substance or composite inorganic particles composed of plural substances if light transmittance is not reduced. Necessary property can be improved more effectively by employing composite inorganic microparticles composed of plural substances having different characteristics.

An average primary particle diameter of the inorganic microparticles is preferably 1 to 50 nm, more preferably 1 to 20 nm, and further preferably 1 to 10 nm. The average primary diameter is an average value of diameters of spheres converted so as to have the same volume of the inorganic microparticles. The value can be estimated by photography of transmission electron microscope.

Shape of the inorganic microparticles is not limitative, but sphere shape microparticles are used preferably. A value of (minimum particle diameter)/(maximum particle diameter) of a microparticle is preferably 0.5 to 1.0 and more preferably 0.7 to 1.0, practically, wherein the minimum particle diameter is a minimum distance between two lines tangent to perimeter of a microparticle, and the maximum particle diameter a maximum distance between two lines tangent to perimeter of the microparticle.

Content ratio of the inorganic microparticles to thermosetting resin is preferably 1 to 60 % by volume.

Distribution of particle diameters is not limitative and those having relatively narrower distribution are preferable to those having broad distribution.

A method of manufacturing image pick-up device 100 is described by referring to Fig. 3.

First, camera module 2 is set up by assembling substrate module 5 and lens module 6, wherein the mount portion 15b of lens holder 15 is inserted into mounting hole 10a of the subsidiary substrate 10 so that bottom portion of color part 17 preliminary provided within lens holder is made contact with the upper surface of the subsidiary substrate 10 and fixed, as illustrated in Fig. 3a.

Then the camera module 2 and other electronics parts are put on the circuit substrate 1 at predetermined position which has been subjected to solder potting preliminarily, as illustrated Fig. 3b. Thereafter, the circuit substrate having the camera module 2 and other electronics parts is transferred to reflow oven (not shown) by a belt conveyer and so on, and the circuit substrate is subjected to reflow process to heat at temperature about 260 °C. Solder 18 is melt as its result, and the camera module 2 and other electronics parts are mounted on the circuit substrate 1.

Lens 16 is composed of not only silicone resin but organic-inorganic composite material containing inorganic microparticles and therefore can cope with reflow process and manufacturing cost can be reduced, wherein cost to mounting the camera module 2 on the circuit substrate separately after reflow process is not necessary, and deterioration of optical property of lens 16 due to reflow process can be inhibited, as illustrated in the Example described below, by the embodiment of this invention mentioned above. In other words, coefficient of linear expansion can be suppressed though the composing material is based on the silicone resin, and large Abbe number of the composing material can be obtained, as well as occurrence of magnification color aberration can be reduced, since composing material of lens 16 comprises inorganic microparticles.

Further, when the composing material comprises inorganic microparticles, optimal viscosity for forming lens 16 van be adjusted by controlling particle diameter of the inorganic microparticles, and thermosetting time is shortened since coefficient of thermal conductivity of the composing material as itself becomes large. Furthermore in case that anti-reflection coating layer is formed on a surface of lens 16, inorganic microparticles effects improved easy coating with tight coating layer, and generation of cracking in the layer is inhibited since the thermal expansion coefficient is suppressed as described above.

### EXAMPLE

### (1) Preparation of Samples

### <Inventive Example>

Inorganic microparticles primarily composed of SiO₂ having particle diameter of about 10 nm was added in an amount of 25 % by volume to B-component of silicone resin SR 7010 manufactured by Dow Corning Toray Co., Ltd. Then A-component of SR 7010 was mixed to the resulting B-component, and the mixture was extruded to mold at 110 °C, and was subjected to pressure molding process at 150 °C for 3 minutes. Test piece having thickness of 3 mm was obtained and was used for test sample of the Inventive Example.

### <Comparative Example 1>

A-component and B-component of silicone resin SR 7010 manufactured by Dow Corning Toray Co., Ltd. were mixed and extruded to mold at 110 °C, then was subjected to pressure molding process at 150 °C for 5 minutes. Test piece having thickness of 3 mm was obtained and was used for test sample of the Comparative Example 1. The Comparative Example 1 is different from Inventive Example because no inorganic microparticles are added.

### <Comparative Example 2>

Acryl type resin, CF-055, manufactured by Daiso Co., Ltd. was employed in place of silicone resin of Comparative Example 1. Comparative Example 2 was prepared in the same manner as Comparative Example 1 excepting that.

### <Comparative Example 3>

Epoxy type resin, 828-US, manufactured by Japan Epoxy Resins Co., Ltd. was employed in place of silicone resin of Comparative Example 1. Comparative Example 3 was prepared in the same manner as Comparative Example 1 excepting that.

### <Comparative Example 4>

Urethane type resin, Urethane Acrylate resin, manufactured by Nippon Kayaku Co., Ltd. was employed in place of silicone resin of Comparative Example 1. Comparative Example 3 was prepared in the same manner as Comparative Example 1 excepting that.

### (2) Evaluation of samples

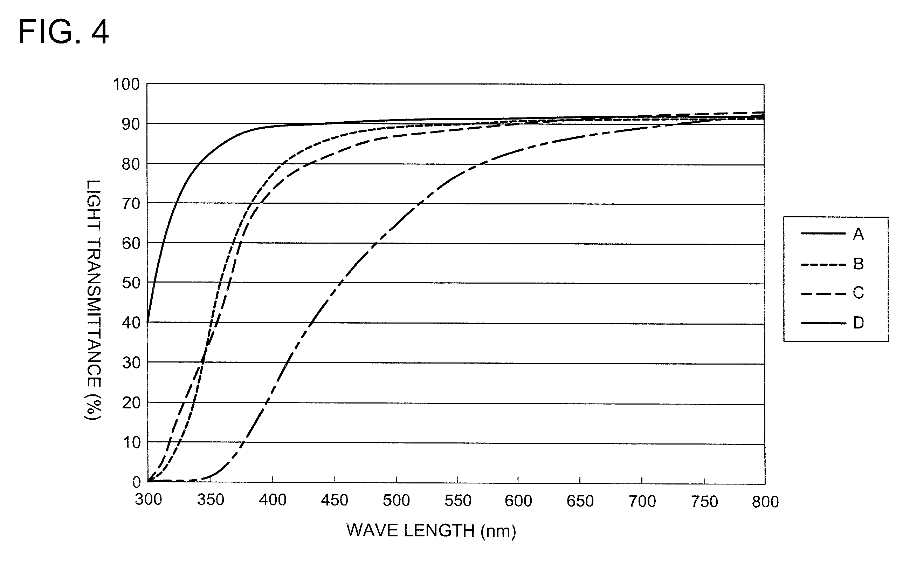

The inventive Example and Comparative Examples 1-4 were subjected to reflow test, (heating process of peak temperature 260 °C, for about 6 minutes), then light transmittance etc. were measured after the reflow process for each samples. The result of measurement is shown in Table 1 described below and Fig. 4. "Face shape difference" is a difference of the shape measured before and after the test by three dimension measuring apparatus UA3P manufactured by Matsushita Electric Industrial Co., Ltd. Focal point drift and coefficient of linear expansion measured with temperature change of 20 °C were measured further to reflow test. Focal point drift was measured for a lens having F number of 2.88 and focal distance of 2.8 mm formed by employing materials of Inventive Example and Comparative Examples 1-4. The result is shown in Table 1 below.

Lines A, B, C and D represent Comparative Example 1 (silicone type), Comparative Example 2 (acryl type), Comparative Example 3 (epoxy type) and Comparative Example 4 (urethane type), respectively.

**Table 1**

| Sample | Inventive Example | Comparative Example 1 | Comparative Example 2 | Comparative Example 3 | Comparative Example 4 |
|---|---|---|---|---|---|
| Resin | Silicon with inorganic microparticles | Silicon | Acryl type | Epoxy type | Urethane type |
| Transmittance after reflow, % (400 nm) | 85 | 89 | 77 | 73 | 23 |
| Transmittance variation after reflow, % | -0.1 | -0.1 | -10.2 | -15.3 | -58.1 |
| Face shape difference after reflow | 1.9 nm | 169 nm | 678 nm | 52 nm | 1.23 µm |
| Focal point drift with 20 °C temperature change | 12 µm | 40 µm | 11 µm | 8 µm | 8 µm |
| Linear expansion measured with 20 °C temperature change (ppm) | 100 | 170 | 100 | 65 | 100 |
| Glass transition temperature Tg (°C) | -120 | -120 | 100 | 110 | 45 |
| Molding time (Minutes) | 3 | 5 | 60 | 50 | 40 |
| Refractive index (nd) index | 1.53 | 1.53 | 1.55 | 1.50 | 1.60 |
| Abbe number (vd) | 40 | 36 | 42 | 57 | 31 |

### (3) Result

Sample of the Inventive Example showed almost no transmittance variation after reflow and small face shape difference. Sample of the Comparative Example 1 showed large focal point drift with temperature change though transmittance variation after reflow was small. Sample of the Comparative Example 2 was revealed not to be practically acceptable level since it showed large transmittance variation after reflow as -10.2 %, and the face shape difference after reflow was about 700 nm. Sample of the Comparative Example 2 also took 1 hour for thermosetting at 130 °C. Sample of the Comparative Example 3 showed large deterioration of transmittance variation after reflow as - 15.3 %. Sample of the Comparative Example 4 showed large deterioration of transmittance variation after reflow as - 58.1 %, and the face shape difference after reflow exceeded to 1 µm.

It is understood that an optical element composed of an organic-inorganic composite material containing a silicone resin and inorganic microparticles can cope with reflow process, and it can inhibit deterioration of optical property through reflow process.

## Claims

1. An image pick-up device comprising;
a substrate on which an image sensor having an image receiving part is mounted,
a lens body for image formation by light reflected from a subject on the image receiving part, and
a holder for holding the lens body,
wherein the lens body is composed of an organic-inorganic composite material comprising an inorganic microparticles having a particle diameter of not more than 50 nm and a thermosetting resin having siloxane bond having Si-O-Si as a back born, and
the module comprising the lens body and the holder is fixed to the substrate over the image sensor via reflow process.

2. The image pick-up device of claim 1, wherein a glass transition temperature Tg of the organic-inorganic composite material satisfies Tg < -40 °C or 260 °C < Tg

3. The image pick-up device of claim 1 or 2, wherein the lens body has a transmittance of light having wavelength of 400 nm of not less than 80 %.

4. The image pick-up device of any one of claims 1 to 3, wherein the lens body has lower coefficient of linear expansion than that of the thermosetting resin.

5. The image pick-up device of any one of claims 1 to 4, wherein the inorganic microparticles are single particles composed of one kind of substance, composite particles composed of plural kinds of substance, or core-shell particles composed of a core covered with shell.

6. A manufacturing method of an image pick-up device comprising;
a substrate on which an image sensor having an image receiving part is mounted,
a lens body for image formation by light reflected from a subject on the image receiving part, the lens body being composed of an organic-inorganic composite material comprising an inorganic microparticles having a particle diameter of not more than 50 nm and a thermosetting resin having siloxane bond having Si-O-Si as a back born, and
a holder for holding the lens body,
wherein the method comprises steps of;
putting the module comprising the lens body and the holder on the substrate over the image sensor, and
subjecting the substrate on which the module has been put to reflow process so as to fix the module to the substrate over the image sensor.
